# EUROPEAN PATENT APPLICATION

(11) **EP 3 614 543 A1**
(43) Date of publication of application: **26.02.2020**
(21) Application number: 18189726.5
(22) Date of filing: 20.08.2018
(51) Int. Cl.: H02M 1/32, H02M 7/483

(54) **SWITCHING VALVE**

(71) Applicant: General Electric Technology GmbH, 5400 Baden (CH)
(72) Inventor: XU, Tianning, Stafford, Staffordshire ST16 1WS (GB)
(74) Representative: Brevalex

(57) **Abstract**

A switching valve, for connection between first and second terminals (24,26,34) of a converter (20), comprises:
a switching module (44) including at least one module switching element (46) and at least one energy storage device (48), the or each module switching element (46) and the or each energy storage device (48) in the switching module (44) arranged to be combinable to selectively provide a voltage source;
a bypass device (38) including at least one bypass switching element (56), the or each bypass switching element (56) configured to be switchable to switch the bypass device (38) into a bypass mode by forming a bypass current path through which a current of the switching valve flows to bypass the switching module (44);
a discharge circuit including at least one discharge switching element (50), the or each discharge switching element (50) configured to be switchable to switch the discharge circuit into a discharge mode by forming a discharge current path through which a discharge current flows to discharge an energy stored in the or each energy storage device (48); and
a controller (54) configured to selectively control the switching of the or each discharge switching element (50) so as to carry out a switching operation responsive to receipt of a signal for triggering a switching of the bypass device (38) into the bypass mode, the switching operation including switching the discharge circuit into the discharge mode to discharge an energy stored in the or each energy storage device (48) before the bypass device (38) is switched into the bypass mode and/or while the bypass device (38) is in the bypass mode.

## Description

This invention relates to a switching valve, a converter, a method of controlling a switching valve, and a method of controlling a converter, preferably for use in high voltage direct current (HVDC) transmission.

In HVDC power transmission networks alternating current (AC) power is typically converted to direct current (DC) power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance.

The conversion between DC power and AC power is utilized in power transmission networks where it is necessary to interconnect the DC and AC networks. In any such power transmission network, converters are required at each interface between AC and DC power to effect the required conversion from AC to DC or from DC to AC. Such converters may employ switching valves to perform power conversion.

According to an aspect of the invention, there is provided a switching valve, for connection between first and second terminals of an electrical circuit, comprising:
a switching module including at least one module switching element and at least one energy storage device, the or each module switching element and the or each energy storage device in the switching module arranged to be combinable to selectively provide a voltage source;
a bypass device including at least one bypass switching element, the or each bypass switching element configured to be switchable to switch the bypass device into a bypass mode by forming a bypass current path through which a current of the switching valve flows to bypass the switching module;
a discharge circuit including at least one discharge switching element, the or each discharge switching element configured to be switchable to switch the discharge circuit into a discharge mode by forming a discharge current path through which a discharge current flows to discharge an energy stored in the or each energy storage device; and
a controller configured to selectively control the switching of the or each discharge switching element so as to carry out a switching operation responsive to receipt of a signal for triggering a switching of the bypass device into the bypass mode, the switching operation including switching the discharge circuit into the discharge mode to discharge an energy stored in the or each energy storage device before the bypass device is switched into the bypass mode and/or while the bypass device is in the bypass mode.

During the operation of the switching valve, the or each module switching element is switchable to control the switching of the or each energy storage device into and out of circuit to selectively provide the voltage source. The energy level of the or each energy storage device may vary due to charging and discharging of the or each energy storage device when a current of the switching valve flows therethrough.

Bypass of the switching module may be required under fault or normal operating conditions of the switching valve to, for example, ensure the continuity of the operation of the switching valve or ensure the safety of the switching module.

In fault operating conditions of the switching valve, a fault may occur in the switching module, elsewhere in the switching valve, or in an external electrical device, circuit or network associated with the switching valve. When the fault occurs in the switching module, bypass of the switching module may be required in order to allow the switching valve to continue operating. When the fault occurs elsewhere in the switching valve or in an external electrical device, circuit or network associated with the switching valve, bypass of the switching module may be required to protect the switching valve from the fault.

In normal operating conditions of the switching valve, neither the switching module nor the switching valve experiences any fault. Under such operating conditions, bypass of the switching module is not carried out in response to a fault, but may instead carried out in response to, for example, an operator decision, or the need to perform maintenance of the switching module or the switching valve. This would enable isolation of the switching module from the rest of the switching valve to either permit the switching valve to continue operating or ensure the safety of the switching module or the rest of the switching valve.

When the bypass device is switched into the bypass mode to effect the bypass of the switching module, there is a risk of the or each bypass switching element being exposed to an energy exceeding its rating depending on the amount of energy stored in the or each energy storage device. Such exposure may not only result in damage of the bypass device, which can be detrimental to the safety and reliability of the switching valve, but also create the risk of overheating or arcing in the or each bypass switching element, thus potentially causing a fire.

The combination of the discharge circuit and the controller in the switching valve of the invention permits the automatic controlled discharging of the or each energy storage device prior to and/or during the bypass mode of the bypass device, so that the amount of energy stored in the or each energy storage device can be lowered to reduce the energy experienced by the or each bypass switching element to a safe level.. The higher the discharge rate, the lower the amount of energy left in the or each energy storage device by the time the or each bypass switching element closes to switch the bypass device into the bypass mode. The controlled discharging of the or each energy storage device can be initiated immediately upon receipt of the signal for triggering a switching of the bypass device into the bypass mode.

As a result, there is no need to increase the rating of the or each bypass switching element, which would undesirably increase the switching valve's size, weight and cost. Instead the or each bypass switching element can be optimised in accordance with the bypass function of the bypass device, thus providing a more cost-effective bypass device.

It will be appreciated that the discharging of the energy stored in the or each energy storage device may involve discharging part or all of the energy stored in the or each energy storage device.

The signal for triggering the switching of the bypass device into the bypass mode may be, but is not limited to, a signal that corresponds to: a faulty state of the switching module, the switching valve or an external electrical device, circuit or network associated with the switching valve; or a command to switch the bypass device into the bypass mode. The signal may be generated by: the controller: an external controller; or a sensor monitoring an operating parameter of the switching module, the switching valve or an external electrical device, circuit or network associated with the switching valve.

In embodiments of the invention, the controller may be configured to selectively control the switching of the or each bypass switching element. This would enhance the switching operation carried out by the controller by providing greater control over the timing between the switching of the discharge circuit into the discharge mode and the switching of the bypass device into the bypass mode.

In further embodiments of the invention, the controller may be configured to selectively control the switching of the or each discharge switching element so as to carry out an energy regulation operation. The energy regulation operation may include switching the discharge circuit into the discharge mode to discharge an energy stored in the or each energy storage device so as to regulate an energy level of the or each energy storage device.

Configuration of the controller to enable performance of the energy regulation operation ensures that the or each energy storage device stays below the voltage level corresponding to its maximum voltage capacity, thus resulting in a safe and reliable operation. In addition, the ability to regulate the energy level of the or each energy storage device may be used to rapidly discharge the or each energy storage device in order to, for example, permit fast access to the switching module for repair or maintenance. Increasing the functionality of the discharge circuit advantageously improves the efficiency of the switching valve.

The discharge circuit and the bypass device may vary in configuration.

The switching module may include the discharge circuit. This not only allows for a quicker discharging of the energy stored in the or each energy storage device, but also provide a simpler electrical connection between the switching module and discharge circuit. It will be understood that it is not essential for the discharge circuit to form part of the switching module.

Optionally the discharge circuit may be connected in parallel with the or each energy storage device. This provides a reliable means of forming the discharge current path that would enable discharging of the energy stored in the or each energy storage device.

The bypass device may be connected in parallel with the switching module. This provides a reliable means of forming the bypass current path that would enable bypass of the switching module.

The discharge circuit may include at least one energy dissipation element, the or each energy dissipation element arranged so that, in the discharge mode of the discharge circuit, the discharge current path is configured to direct the discharge current through the or each energy dissipation element. In such embodiments, the or each energy dissipation element may be or may include a resistor. The or each resistor may have a linear or non-linear voltage-current characteristic. An example of a resistor with a non-linear voltage-current characteristic is a metal oxide varistor. The parameters of the or each energy dissipation element may be optimised in accordance with the discharging requirements of the discharge circuit.

The discharging of the energy stored in the or each energy storage device in the discharge mode may be carried out through energy dissipation via the or each discharge switching element, which in practice may have sufficient resistance to function as an energy dissipation element. The discharging of the energy stored in the or each energy storage device in the discharge mode may be carried out through energy dissipation via the or each energy dissipation element, which is separate from the or each discharge switching element. The discharging of the energy stored in the or each energy storage device in the discharge mode may be carried out through energy dissipation via the or each discharge switching element and the or each separate energy dissipation element.

The switching valve may include a plurality of switching modules and/or a plurality of bypass devices and/or a plurality of discharge circuits. Bypass of each switching module may be carried out by a respective one of the bypass devices. Each switching module may include a respective one of a plurality of discharge circuits.

The switching valve may be used in a wide range of applications and apparatus requiring switching capabilities. One such apparatus may be a converter.

According to a second aspect of the invention, there is provided a converter comprising first and second terminals, the first terminal configured for connection to a first network, the second terminal configured for connection to a second network, wherein the converter further includes at least one switching valve according to the first aspect of the invention or any one of its embodiments, the or each switching valve arranged to be connected between the first and second terminals. Preferably the or each switching module is configured to be switchable to control a transfer of power between the first and second networks.

The features and advantages of the switching valve of the first aspect of the invention and its embodiments apply mutatis mutandis to the converter of the second aspect of the invention and its embodiments.

The converter may include a single first terminal or a plurality of first terminals. The converter may include a single second terminal or a plurality of second terminals. The or each first terminal may be a DC terminal. The or each second terminal may be an AC terminal.

According to a third aspect of the invention, there is provided a method of controlling a switching valve for connection between first and second terminals of an electrical circuit, the switching valve comprising:
a switching module including at least one module switching element and at least one energy storage device, the or each module switching element and the or each energy storage device in the switching module arranged to be combinable to selectively provide a voltage source;
a bypass device including at least one bypass switching element, the or each bypass switching element configured to be switchable to switch the bypass device into a bypass mode by forming a bypass current path through which a current of the switching valve flows to bypass the switching module; and
a discharge circuit including at least one discharge switching element, the or each discharge switching element configured to be switchable to switch the discharge circuit into a discharge mode by forming a discharge current path through which a discharge current flows to discharge an energy stored in the or each energy storage device,
wherein the method includes the step of carrying out a switching operation responsive to receipt of a signal for triggering a switching of the bypass device into the bypass mode, the switching operation including switching the discharge circuit into the discharge mode to discharge an energy stored in the or each energy storage device before the bypass device is switched into the bypass mode and/or while the bypass device is in the bypass mode.

The features and advantages of the switching valve of the first aspect of the invention and its embodiments apply mutatis mutandis to the method of the third aspect of the invention and its embodiments.

According to a fourth aspect of the invention, there is provided a method of controlling a converter comprising first and second terminals, the first terminal configured for connection to a first network, the second terminal configured for connection to a second network, wherein the converter further includes at least one switching valve, the or each switching valve arranged to be connected between the first and second terminals, the method including the step of carrying out the method of the second aspect of the invention or any one of its embodiments.

The features and advantages of the converter of the second aspect of the invention and its embodiments apply mutatis mutandis to the method of the fourth aspect of the invention and its embodiments.

The or each switching module may vary in configuration.

In a first exemplary configuration of a switching module, the or each module switching element and the or each energy storage device in the switching module may be arranged to be combinable to selectively provide a unidirectional voltage source. For example, the switching module may include a pair of module switching elements connected in parallel with an energy storage device in a half-bridge arrangement to define a 2-quadrant unipolar switching module that can provide zero or positive voltage and can conduct current in two directions.

In a second exemplary configuration of a switching module, the or each module switching element and the or each energy storage device in the switching module may be arranged to be combinable to selectively provide a bidirectional voltage source. For example, the switching module may include two pairs of module switching elements connected in parallel with an energy storage device in a full-bridge arrangement to define a 4-quadrant bipolar switching module that can provide negative, zero or positive voltage and can conduct current in two directions.

A plurality of switching modules may be connected in series to define a chain-link converter. The structure of the chain-link converter permits build-up of a combined voltage across the chain-link converter, which is higher than the voltage available from each of its individual switching modules, via the insertion of the energy storage devices of multiple switching modules, each providing its own voltage, into the chain-link converter. In this manner switching of the or each module switching element in each switching module causes the chain-link converter to provide a stepped variable voltage source, which permits the generation of a voltage waveform across the chain-link converter using a step-wise approximation. As such the chain-link converter is capable of providing a wide range of complex voltage waveforms.

At least one switching element may include at least one self-commutated switching device. The or each self-commutated switching device may be an insulated gate bipolar transistor, a gate turn-off thyristor, a field effect transistor, an injection-enhanced gate transistor, an integrated gate commutated thyristor or any other self-commutated switching device. The number of switching devices in each switching element may vary depending on the required voltage and current ratings of that switching element.

At least one switching element may further include a passive current check element that is connected in anti-parallel with the or each switching device. The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

The or each bypass switching element may be or may include, but is not limited to, a mechanical switching element or a vacuum switching element.

Each energy storage device may be any device that is capable of storing and releasing energy to selectively provide a voltage, e.g. a capacitor, fuel cell or battery.

The configuration of the converter may vary depending on the requirements of the power transfer between the first and second networks.

In embodiments of the invention, the converter may include at least one converter limb and a plurality of switching modules, the or each converter limb extending between a pair of first terminals defining first and second DC terminals, the or each converter limb including first and second limb portions separated by a second terminal defining an AC terminal, each limb portion including at least one of the switching modules.

In a preferred embodiment of the invention, the converter includes three converter limbs, each of which is connectable via the respective AC terminal to a respective phase of a three-phase AC network. It will be appreciated that the converter may include a different number of converter limbs, each of which is connectable via the respective AC terminal to a respective phase of an AC network with the corresponding number of phases.

It will be appreciated that the use of the terms "first" and "second", and the like, in this patent specification is merely intended to help distinguish between similar features (e.g. the first and second terminals), and is not intended to indicate the relative importance of one feature over another feature, unless otherwise specified.

A preferred embodiment of the invention will now be described, by way of a non-limiting example, with reference to the accompanying drawings in which:
Figure 1 shows schematically a voltage source converter according to an embodiment of the invention;
Figure 2 shows schematically a switching module of the voltage source converter of Figure 1;
Figure 3 illustrates a bypass mode of a bypass device of the voltage source converter of Figure 1; and
Figure 4 illustrates a switching operation of the voltage source converter of Figure 1 in which discharge and bypass modes are activated in sequence.

The figures are not necessarily to scale, and certain features and certain views of the figures may be shown exaggerated in scale or in schematic form in the interests of clarity and conciseness.

The following embodiment of the invention is used primarily in HVDC applications, but it will be appreciated that the following embodiment of the invention is applicable mutatis mutandis to other applications operating at different voltage levels.

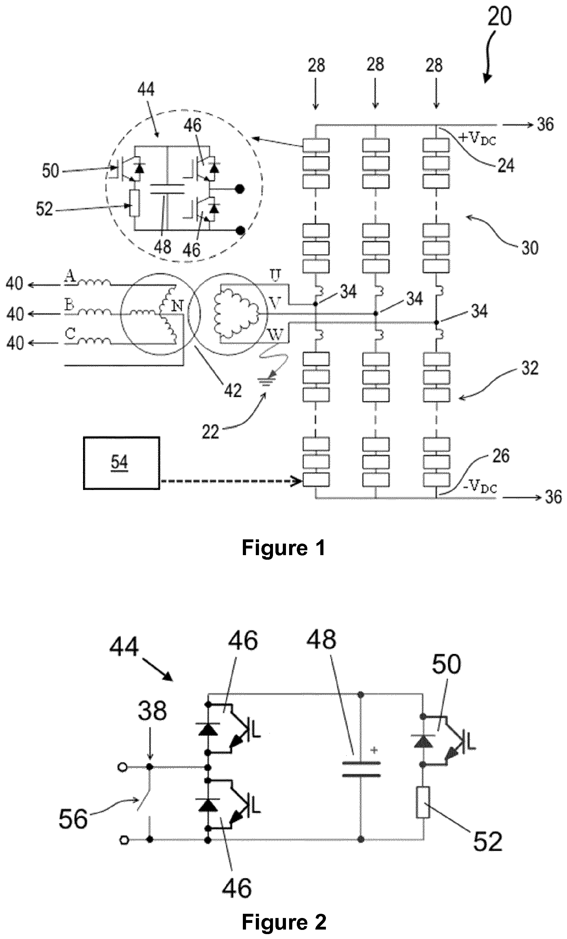

A voltage source converter according to an embodiment of the invention is shown in Figure 1 and is designated generally by the reference numeral 20.

The voltage source converter 20 includes first and second DC terminals 24,26 and a plurality of converter limbs 28. Each converter limb 28 extends between the first and second DC terminals 24,26 and includes first and second limb portions 30,32 separated by a respective AC terminal 34. In each converter limb 28, the first limb portion 30 extends between the first DC terminal 24 and the AC terminal 34, while the second limb portion 32 extends between the second DC terminal 26 and the AC terminal 34.

In use, the first and second DC terminals 24,26 of the voltage source converter 20 are respectively connected to a DC network 36. In use, the AC terminal 34 of each converter limb 28 of the voltage source converter 20 is connected to a respective AC phase of a three-phase AC network 40 via a star-delta transformer arrangement 42. It is envisaged that, in other embodiments of the invention, the transformer arrangement may be a different type of transformer arrangement, such as a star-star transformer arrangement.

Each limb portion 30,32 includes a switching valve, which includes a chain-link converter that is defined by a plurality of series-connected switching modules 44. Figures 1 and 2 show schematically the structure of each switching module 44.

Each switching module 44 includes a pair of module switching elements 46 and a capacitor 48. The pair of module switching elements 46 are connected in parallel with the capacitor 48 in a half-bridge arrangement to define a 2-quadrant unipolar module that can provide zero or positive voltage and can conduct current in both directions. Hence, in each switching module 44, a first of the pair of module switching elements 46 and the capacitor 48 are in a series connection between a pair of module terminals, and a second of the pair of module switching elements 46 is connected in parallel with the series connection between the pair of module terminals.

Each module switching element 46 is in the form of an insulated gate bipolar transistor (IGBT) which is connected in parallel with an anti-parallel diode.

It is envisaged that, in other embodiments of the invention, each IGBT may be replaced by a gate turn-off thyristor, a field effect transistor, an injection-enhanced gate transistor, an integrated gate commutated thyristor or any other self-commutated semiconductor device. It is also envisaged that, in other embodiments of the invention, each diode may be replaced by a plurality of series-connected diodes.

The capacitor 48 of each switching module 44 is selectively bypassed or inserted into the corresponding chain-link converter by changing the states of the module switching elements 46. This selectively directs current through the capacitor 48 or causes current to bypass the capacitor 48, so that the switching module 44 provides a zero or positive voltage.

The capacitor 48 of the switching module 44 is bypassed when the module switching elements 46 in the switching module 44 are configured to form a short circuit in the switching module 44, whereby the short circuit bypasses the capacitor 48. This causes current in the corresponding chain-link converter to pass through the short circuit and bypass the capacitor 48, and so the switching module 44 provides a zero voltage, i.e. the switching module 44 is configured in a bypassed mode.

The capacitor 48 of the switching module 44 is inserted into the corresponding chain-link converter when the module switching elements 46 in the switching module 44 are configured to allow the current in the corresponding chain-link converter to flow into and out of the capacitor 48. The capacitor 48 then charges or discharges its stored energy so as to provide a positive voltage, i.e. the switching module 44 is configured in a non-bypassed mode.

In this manner the module switching elements 46 in each switching module 44 are switchable to control flow of current through the corresponding capacitor 48.

It is possible to build up a combined voltage across each chain-link converter, which is higher than the voltage available from each of its individual switching modules 44, via the insertion of the capacitors of multiple switching modules 44, each providing its own voltage, into each chain-link converter. In this manner switching of the module switching elements 46 in each switching module 44 causes each chain-link converter to provide a stepped variable voltage source, which permits the generation of a voltage waveform across each chain-link converter using a step-wise approximation. Hence, the module switching elements 46 in each limb portion 30,32 are switchable to selectively permit and inhibit flow of current through the corresponding capacitor 48 in order to control a voltage across the corresponding limb portion 30,32.

It is envisaged that, in other embodiments of the invention, each switching module 44 may be replaced by another type of switching module, which includes a plurality of module switching elements and at least one energy storage device, the plurality of module switching elements and the or each energy storage device in each such switching module being arranged to be combinable to selectively provide a voltage source.

It is also envisaged that, in other embodiments of the invention, the capacitor 48 in each switching module 44 may be replaced by another type of energy storage device which is capable of storing and releasing energy to provide a voltage, e.g. a battery or a fuel cell.

Each switching module 44 further includes a discharge circuit in the form of a series connection of a discharge switching element 50 and a discharge resistor 52. In each switching module 44, the series connection of the discharge switching element 50 and the discharge resistor 52 is connected in parallel with the capacitor 48 such that the discharge switching element 50 is switchable to switch the discharge resistor 52 into and out of the switching module 44.

The configuration of the discharge circuit may vary as long as the discharge circuit includes at least one discharge switching element, with the or each discharge switching element configured to be switchable to switch the discharge circuit into a discharge mode by forming a discharge current path through which a discharge current flows to discharge an energy stored in the capacitor 48. It is envisaged that, in other embodiments of the invention, the discharge switching element and the discharge resistor may be arranged differently in the discharge circuit. It is also envisaged that, in still other embodiments of the invention, the discharge circuit may include a different number of discharge switching elements and/or a different number of discharge resistors. Each capacitor 48 may be, for example, a fast discharge capacitor.

Each switching valve includes a plurality of bypass devices 38. Each bypass device 38 is connected in parallel with a respective one of the switching modules 44. More specifically, each bypass device 38 includes a bypass switching element 56 connected across the module terminals of the corresponding switching module 44. Each bypass switching element 56 may be in the form of a mechanical switching element or a vacuum switching element.

The voltage source converter 20 further includes a controller 54 programmed to control the switching of the module switching elements 46, the discharge switching elements 50, and the bypass switching elements 56.

For the purposes of simplicity, the controller 54 is exemplarily described with reference to its implementation as a single control unit. The configuration of the controller 54 may vary depending on specific requirements of the voltage source converter 20. For example, the controller 54 may include a plurality of control units, each of which is programmed to control the switching of the module switching elements 46 and the discharge switching element 50 of a respective one of the switching modules and the corresponding bypass switching element 56. Each control unit may be configured to be internal to, or external of, the corresponding switching module 44. Alternatively, the controller may include a combination of one or more control units internal to the corresponding switching module 44 and one or more control units external of the corresponding switching module 44. Each control unit may be configured to communicate with at least one other control unit via telecommunications links.

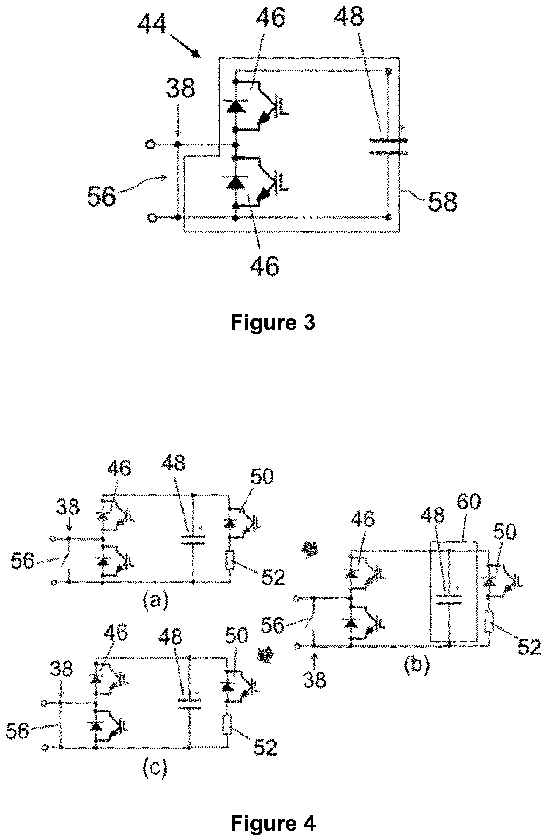

Operation of the voltage source converter 20 is described as follows with reference to Figures 3 and 4.

In order to transfer power between the DC and AC networks 36,40, the controller 54 controls the switching of the module switching elements 46 of the switching modules 44 to switch the capacitors of the respective limb portions 30,32 into and out of circuit between the respective DC and AC terminals 24,26,34 to interconnect the DC and AC networks 36,40. The controller 54 switches the module switching elements 46 of the switching modules 44 of each limb portion 30,32 to provide a stepped variable voltage source between the respective DC and AC terminals 24,26,34 and thereby generate a voltage waveform so as to control the configuration of an AC voltage waveform at the corresponding AC terminal 34 to facilitate the transfer of power between the DC and AC networks 36,40.

For each switching module 44, during a normal operating state of the voltage source converter 20, the controller 54 may selectively control the switching of the discharge switching element 50 to switch the discharge resistor 52 into the switching module 44 at a switch-in voltage level of the capacitor 48. This results in the formation of a discharge current path that extends through the capacitor 48, the discharge switching element 50, and the discharge resistor 52. This in turn allows a discharge current to flow through the discharge current path in order to discharge an energy stored in the capacitor 48. In this manner each discharge circuit is switchable into a discharge mode in order to carry out an energy regulation operation to regulate the energy level of the corresponding capacitor 48.

Each switch-in voltage level is set to be lower than a voltage level corresponding to a maximum voltage capacity of the corresponding capacitor 48. This ensures that each capacitor 48 stays below the voltage level corresponding to its maximum voltage capacity, thus providing overvoltage protection to ensure the safe operation of the corresponding switching module 44.

For each switching module 44, after the voltage level of the capacitor 48 drops to a switch-out voltage level by a voltage hysteresis amount, the controller 54 controls the switching of the discharge switching element 50 to switch the switched-in discharge resistor 52 out of the switching module 44 at the switch-out voltage level of the capacitor 48, so that the voltage source converter 20 can resume its normal power transfer operation.

A fault may occur in a given switching module 44 during the operation of the switching valve. In order to permit continued operation of the switching valve, the faulty switching module 44 may be isolated from the rest of the switching valve using the corresponding bypass device 38. Bypass of the faulty switching module 44 is achieved by closing the corresponding bypass switching element 56 so as to form a bypass current path through which a current of the switching valve flows to bypass the faulty switching module 44. In this manner each bypass device 38 is switchable into a bypass mode in order to enable bypass of the corresponding switching module 44.

However, depending on the type of fault that has occurred in the switching module 44, the closed bypass switching element 56 may be exposed to undesirable consequences arising from the energy stored in the capacitor 48.

If the fault is in the form of the first module switching element 46 failing to a short circuit, closing the bypass switching element 56 would result in a current path 58 extending through the closed bypass switching element 56, the shorted first module switching element 46, and the capacitor 48. Figure 3 shows the current path 58. Such a current path 58 in turn provides a means for discharging the energy stored in the capacitor 48. Since part of the discharged energy would be absorbed by the bypass switching element 56, there is a risk of the bypass switching element 56 being exposed to an energy exceeding its rating depending on the amount of energy stored in the capacitor 48. This may lead to damage of the bypass switching element 56 which in turn would impact on its ability to stay closed to maintain the bypass of the faulty switching module 44. Since the bypass device 38 is a critical component to ensure the continued operation of the switching valve in the event of a fault occurring in the corresponding switching module 44, failure of the bypass device 38 would compromise the performance of the switching valve. Furthermore, exposure of the bypass switching element 56 to an energy exceeding its rating may cause a fire due to overheating or arcing in the bypass switching element 56.

Figure 4 illustrates a switching operation of the voltage source converter 20.

The failure of the first module switching element 46 to a short circuit (as shown in Figure 4a) may be detected by a current or voltage sensor, which would generate a signal for triggering the switching of the bypass device 38 into the bypass mode. Upon receipt of this signal, the controller 54 carries out a switching operation in which the discharge mode of the discharge circuit is first activated followed by activation of the bypass mode of the bypass device 38.

When the discharge mode of the discharge circuit is activated, the formation of the discharge current path 60 (as shown in Figure 4b) enables discharging, and thereby reduction, of the energy stored in the capacitor 48 in order to reduce the voltage level of the capacitor 48 to a level compatible with the rating of the bypass switching element 56. The discharging of the energy stored in the capacitor 48 in the discharge mode of the discharge circuit may be carried out to reduce the voltage level of the capacitor 48 to below the switch-out voltage level.

Hence, by the time the bypass switching element 56 is closed (as shown in Figure 4c), the energy stored in the capacitor 48 is already reduced to a level that is sufficiently low to ensure the safety of the bypass switching element 56. The discharging of the energy stored in the capacitor 48 in the discharge mode of the discharge circuit may be continued while the bypass switching element 56 is closed.

Preferably the discharge circuit is configured to discharge the energy stored in the capacitor 48 to a safe level within the response time of the bypass switching element 56. For example, if the discharge resistor 52 has a resistance of 1 Ω, the capacitor 48 has a capacitance of 10 mF and the response time of the bypass switching element 56 is 10 milliseconds, the RC time constant of the discharge circuit would be 10 milliseconds which would enable the voltage level of the capacitor 48 to be reduced to one-third of its pre-switching operation level before the bypass switching element 56 is closed. This means that, in the event of the first module switching element 46 failing to a short circuit, the bypass switching element 56 would only be exposed to one-ninth of the pre-switching operation amount of energy stored in the capacitor 48.

Optionally the controller 54 may be configured to carry out the switching operation, in which the discharge mode of the discharge circuit is first activated followed by activation of the bypass mode of the bypass device 38, under normal operating conditions, for example, in response to an operator decision, or the need to perform maintenance of the switching module 44 or the switching valve. Under such circumstances, the signal for triggering the switching of the bypass device 38 into the bypass mode may be in the form of a command to switch the bypass device 38 into the bypass mode.

It will be appreciated that each configuration of the switching module 44, switching valve, voltage source converter 20 and their components in the above embodiment are merely selected to help illustrate the working of the invention, and may be replaced by a different configuration.

It will be also appreciated that each numerical value given for the embodiment shown is merely chosen to help illustrate the working of the invention, and may be replaced by another numerical value.

## Claims

1. A switching valve, for connection between first and second terminals (24,26,34) of converter (20), comprising:
a switching module (44) including at least one module switching element (46) and at least one energy storage device (48), the or each module switching element (46) and the or each energy storage device (48) in the switching module (44) arranged to be combinable to selectively provide a voltage source;
a bypass device (38) including at least one bypass switching element (56), the or each bypass switching element (56) configured to be switchable to switch the bypass device (38) into a bypass mode by forming a bypass current path through which a current of the switching valve flows to bypass the switching module (44);
a discharge circuit including at least one discharge switching element (50), the or each discharge switching element (50) configured to be switchable to switch the discharge circuit into a discharge mode by forming a discharge current path through which a discharge current flows to discharge an energy stored in the or each energy storage device (48); and
a controller (54) configured to selectively control the switching of the or each discharge switching element (50) so as to carry out a switching operation responsive to receipt of a signal for triggering a switching of the bypass device (38) into the bypass mode, the switching operation including switching the discharge circuit into the discharge mode to discharge an energy stored in the or each energy storage device (48) before the bypass device (38) is switched into the bypass mode and/or while the bypass device (38) is in the bypass mode.

2. A switching valve according to Claim 1 wherein the signal for triggering the switching of the bypass device (38) into the bypass mode is a signal that corresponds to: a faulty state of the switching module (44), the switching valve or an external electrical device, circuit or network associated with the switching valve; or a command to switch the bypass device (38) into the bypass mode.

3. A switching valve according to any one of the preceding claims wherein the controller (54) is configured to selectively control the switching of the or each bypass switching element (56).

4. A switching valve according to any one of the preceding claims wherein the controller (54) is configured to selectively control the switching of the or each discharge switching element (50) so as to carry out an energy regulation operation, the energy regulation operation including switching the discharge circuit into the discharge mode to discharge an energy stored in the or each energy storage device (48) so as to regulate an energy level of the or each energy storage device (48).

5. A switching valve according to any one of the preceding claims wherein the switching module (44) includes the discharge circuit.

6. A switching valve according to any one of the preceding claims wherein the discharge circuit is connected in parallel with the or each energy storage device (48).

7. A switching valve according to any one of the preceding claims wherein the bypass device (38) is connected in parallel with the switching module (44).

8. A switching valve according to any one of the preceding claims wherein the discharge circuit includes at least one energy dissipation element, the or each energy dissipation element arranged so that, in the discharge mode of the discharge circuit, the discharge current path is configured to direct the discharge current through the or each energy dissipation element.

9. A switching valve according to Claim 8 wherein the or each energy dissipation element is or includes a resistor (52).

10. A switching valve according to any one of the preceding claim wherein the switching valve includes a plurality of switching modules (44) and/or a plurality of bypass devices (38) and/or a plurality of discharge circuits.

11. A converter (20) comprising first and second terminals (24,26,34), the first terminal (24,26) configured for connection to a first network (36), the second terminal (34) configured for connection to a second network (40), wherein the converter (20) further includes at least one switching valve according to any one of the preceding claims, the or each switching valve arranged to be connected between the first and second terminals (24,26,34).

12. A converter (20) according to Claim 11 wherein the or each switching module (44) is configured to be switchable to control a transfer of power between the first and second networks (36,40).

13. A method of controlling a switching valve for connection between first and second terminals of an electrical circuit, the switching valve comprising:
a switching module (44) including at least one module switching element (44) and at least one energy storage device (48), the or each module switching element (44) and the or each energy storage device (48) in the switching module (44) arranged to be combinable to selectively provide a voltage source;
a bypass device (38) including at least one bypass switching element (56), the or each bypass switching element (56) configured to be switchable to switch the bypass device (38) into a bypass mode by forming a bypass current path through which a current of the switching valve flows to bypass the switching module (44); and
a discharge circuit including at least one discharge switching element (50), the or each discharge switching element (50) configured to be switchable to switch the discharge circuit into a discharge mode by forming a discharge current path through which a discharge current flows to discharge an energy stored in the or each energy storage device (48),
wherein the method includes the step of carrying out a switching operation responsive to receipt of a signal for triggering a switching of the bypass device (38) into the bypass mode, the switching operation including switching the discharge circuit into the discharge mode to discharge an energy stored in the or each energy storage device (48) before the bypass device (38) is switched into the bypass mode and/or while the bypass device (38) is in the bypass mode.

14. A method of controlling a converter (20) comprising first and second terminals (24,26,34), the first terminal (24,26) configured for connection to a first network (36), the second terminal (34) configured for connection to a second network (40), wherein the converter (20) further includes at least one switching valve, the or each switching valve arranged to be connected between the first and second terminals (24,26,34), the method including the step of carrying out the method of Claim 13.
